# EUROPEAN PATENT APPLICATION

(11) **EP 1 529 437 A1**
(43) Date of publication of application: **11.05.2005**
(21) Application number: 03078169.4
(22) Date of filing: 10.11.2003
(51) Int. Cl.: A01G 9/24, E04D 3/28, E04D 3/362, A01G 9/14

(54) **Flat-roofed fully opening greenhouse**

(71) Applicant: Haley, Christopher Partington, Wigginton, York YO32 2RG (GB)
(72) Inventor: Haley, Christopher Partington, Wigginton, York YO32 2RG (GB)

(57) **Abstract**

A fully opening flat roof greenhouse is designed to provide a natural open air growing environment in favourable climatic conditions, and in unfavourable condition provide the full crop protection of a normal state of the art commercial greenhouse.

This is achieved by providing rows of joined transparent panels (10) along a beam (60). Every 2 rows of panels share a common central pivot point (70) along a beam (60), and these panels raise, via the lifting mechanism (84), through 0 - 90° in opposite directions to stand back to back in a vertical position when fully opened.

## Description

The present invention relates to a greenhouse and, in particular but not exclusively, to large greenhouses such as might be used by a commercial grower. A modern, commercial, state of the art greenhouse presents considerable technical difficulties to the grower, mainly in the creation of ambient "outside" temperatures during favourable weather conditions.

In addition to the problem of temperature control most plant material benefits from the ability to receive the full light spectrum. The lower nanometers of light, and in particular ultra violet rays, will not fully penetrate any transparent membrane such as glass or plastic. As these low nanometers are nature's growth regulant it is important not to exclude them.

Additionally, it is desirable to allow selected natural rainfall directly onto the crop within the structure thus using natures irrigation system rather than an environmentally unfriendly, artificial one.
In short, for the first time, the structure will provide an almost unimpeded (but protected) outside environment.

Existing state of the art greenhouses only provide limited temperature control via differing percentages of ventilation, and do not allow the passage of rain or low nanometer light levels. Some manufacturers provide an opening greenhouse (but not fully), such as "The Cabrio" and "X L" systems. These systems adequately address the temperature problems
but only partially address the light problems and in the case
of the Cabrio system, are unsuitable to be opened during rainfall. In the case of the X L system it is unstable in windy conditions, and the sheer size of the panels in a vertical position when open still provide a substantial impediment to direct sunlight.

In addition to this, all the above mentioned greenhouses have, as well as glazing bars, substantial gutters and ridges, and when a green house is appropriately positioned to allow the maximum amount of sunlight from the south these ridges and gutters impede the light.

It is an aim of the present invention to provide a greenhouse which overcomes, or at least ameliorates, the disadvantages of existing greenhouses, and to provides, for the first time, a virtual outside environme -nt that is protected from conditions that are deemed to be undesirable.

According to the main aspect of the invention there is provided a greenhouse roof comprising a support structure, a plurality of panels of transparent material each supported on the support structure in parallel rows. The panels can be rotated from a closed condition in which they are substantially horizontal, to an open condition in which they can be raised in varying degrees until they become vertical.

The controls of the opening mechanism will, in most cases, assume 3 positions:
(1) Horizontal, making the structure completely closed
(2) 10% approximately of the 90° opening movement would allow adequate ventilation without raining in
(3) Fully open 90° movement to allow normal outside conditions

Typically, each panel is either rectangular or square and has a box profile, and can be manufactured in various widths and joined together end to end integrally until the desired length of the structure is achieved, thus maintaining linear transparency without opaque interference. A typical panel width will be 80cm.

The panels are mounted for pivotal movement about an axis close to one of its edges. The edges are supported in fixed support members which, in turn, are mounted on the support structure in parallel lines at typical centers of 80cm (one panel width ).

Essentially, each row of transparent panels are self supporting so as to minimize the complexity of the support structure. The panels are preferably formed from plastics material such as polycarbonate. Such material can be of lighter weight than glass, thereby minimizing the support structure required and rendering the rows of panels easier to open. Advantageously, the panels are formed as one piece mouldings, thus offering a saving in the cost of production.

It will be appreciated that an advantage of this arrangement completely deletes the need for gutters and ridges, and the deletion of this material means that light interference is radically reduced.

Another aspect of the invention provides a greenhouse comprising of a substructure on which is supported a roof according to the main aspect of the invention.

The substructure may be conventional, or may be specially designed to benefit from the lighter weight of the roof invention. The substructure may be that of an existing greenhouse to which the roof of the present invention has been fitted as a replacement.

An embodiement of the invention will now be described in detail, by way of example, with reference to the accompanying drawings in which:
- Figure 1 -: is a perspective view of a roof structure for a greenhouse embodying the present invention. a further embodiment of the invention is to provide a petition or side wall of conventional glass, with aluminium glazing bars, which can be positioned in sections inside the lines of the support structure stanchions and can be assembled from one face of the building.
- Figure 2 -: Is a perspective view of a panel for the roof structure of fig 1.
- Figure 3 -: Is an end view of the roof structure of fig 1.
- Figure 4 -: Not used
- Figure 5/6 -: Shows in detail the hinge mechanism
- Figure 7: Shows in detail the free edge portions of the panel of fig 2. and associated support members in the roof structure of fig 1.

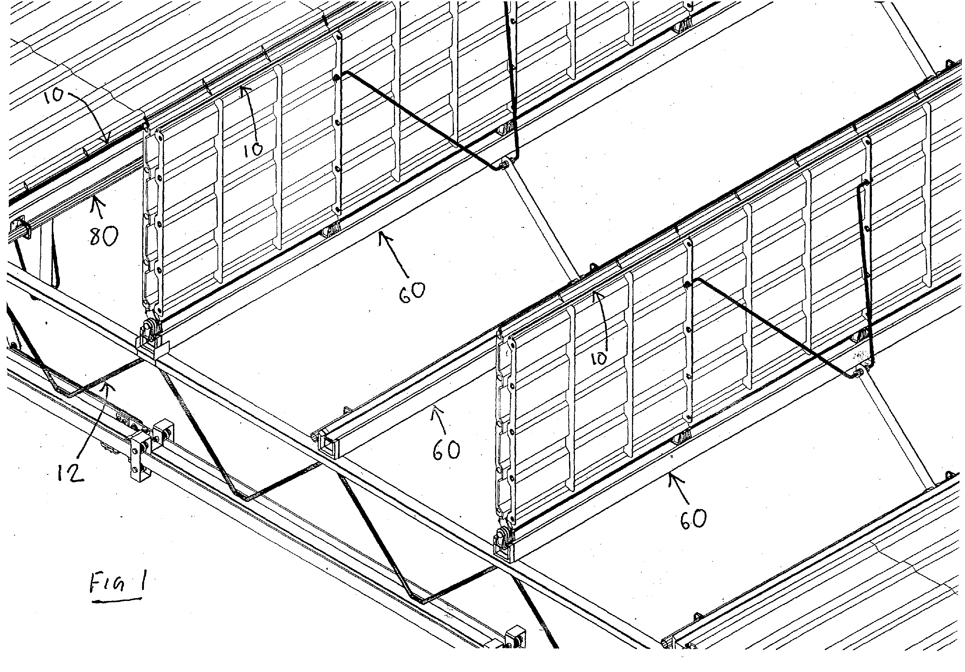

With reference to fig 1. embodying the invention comprises a plurality of panels (10) supported on a supporting structure. The entire roof structure is supported on generally vertical supporting posts, much like those of a conventional venlo greenhouse.

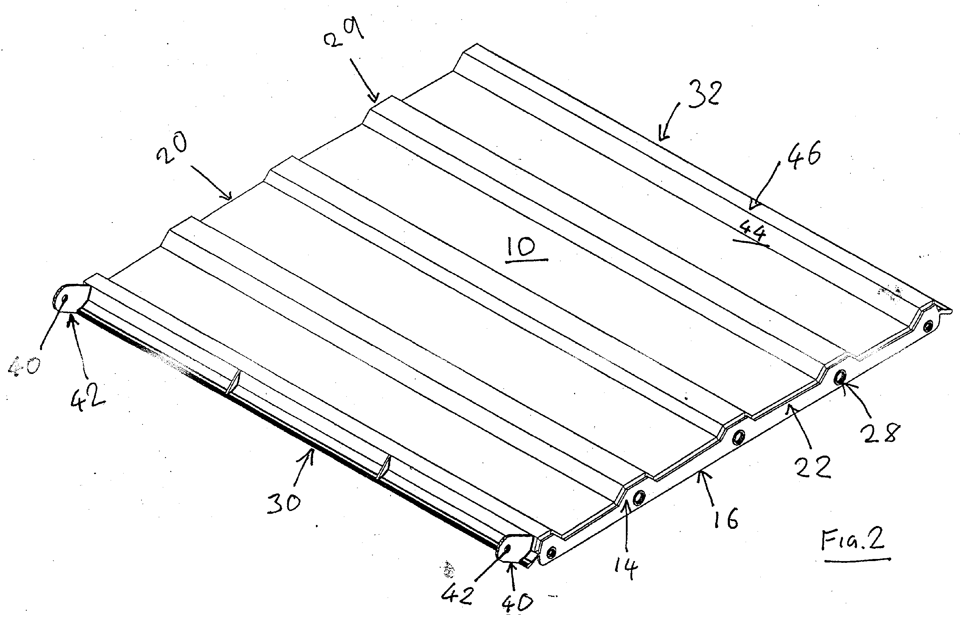

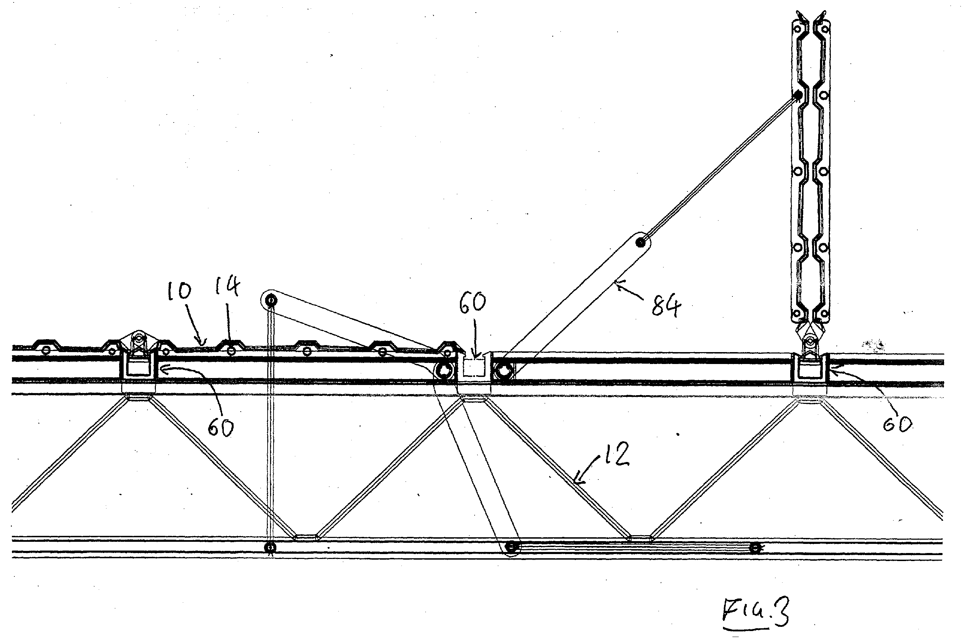

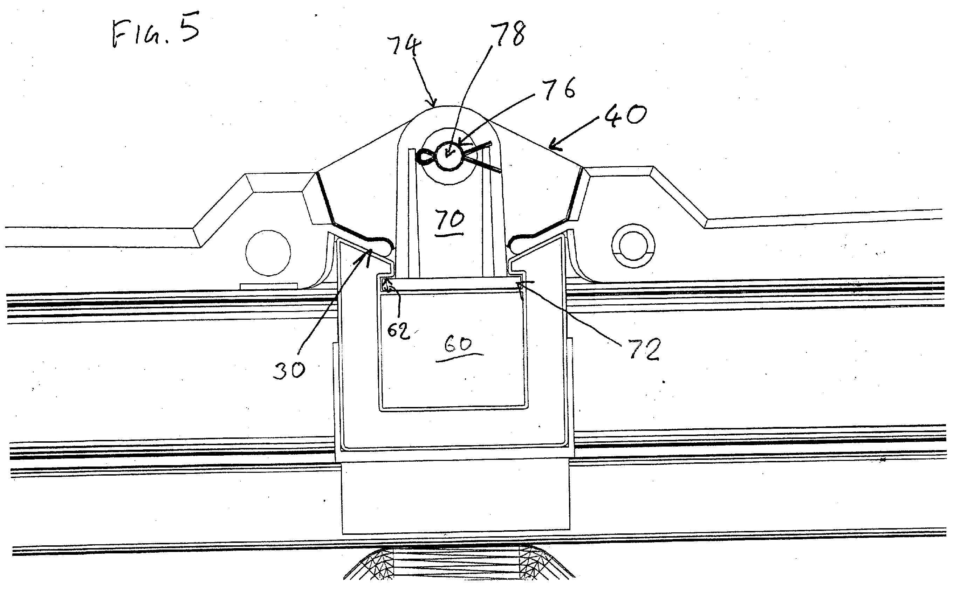

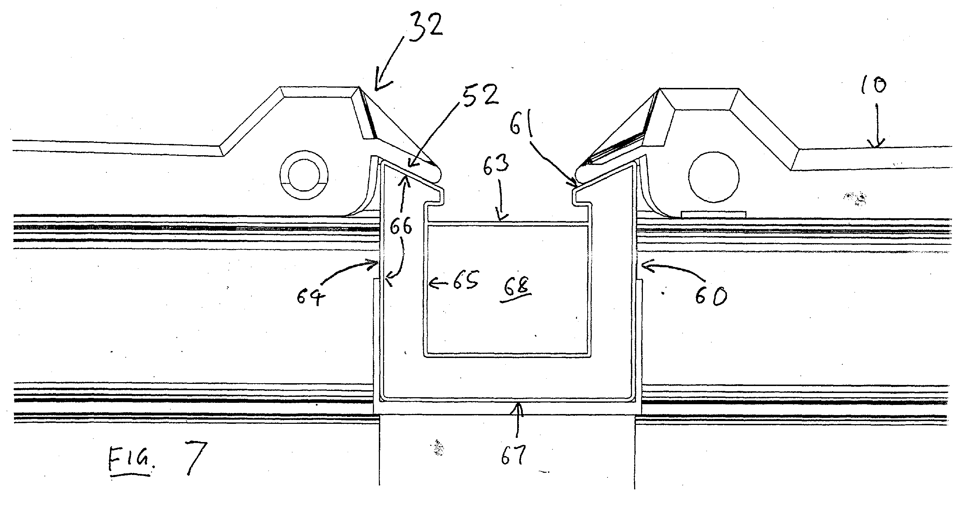

Each panel (10), ( illustrated in greater detail in figs 2 - 7 ), is formed as a one piece plastics moulding of a suitable transparent material such as polycarbonate. The panels are each approximately rectangular with an external dimension of 800mm x 760mm.

Generally, the panels (10) are planar. Each panel (10) has a box profile, embodying 3 projecting ridges (14) extending across its parallel to its longer axis, the ridges (14) being spaced to divide the panel (10) into approximately equal quarters. The ridges being substantially less surface area than the base, their angled faces being at 45° and approximately 20mm in height. From the lower surface of the panel 4 evenly spaced webs (16) project. The webs extend transversely to the ridges and are approximately 20mm deep and 3mm thick. The combined effect of the ridges (14) and the webs (16) is to substantially increase the stiffness of the panel (10).

The panels (10) are designed to interlock with one another along their shorter edges. At the first of the short edges, the outermost web (16) is provided with a profile (20) projecting normally from it and extending along its length, the profile (20) being offset by a short distance from the upper surface. At the opposite short edge, the outermost web (16) has formed in it a groove (22) positioned to receive the profile (20) of an adjacent panel (10). The profile (20) and the groove (22) are dimensioned such that the profile (20) fits the groove (22) with a close sliding fit in a vertical motion.

Adjacent panels (10) are secured together by a plurality of interlocking socket holes (28) (female) and (29) male positioned on the outermost webs (16). One of the holes is to be used to receive a lifting rod as will be described below.

The side, or petition, wall is achieved by providing a top groove extrusion (A), a groove provided within the sill extrusion (B), side split section rebate/grooves (C+D) and split glazing bars comprising of a base bar (E) and a cap bar (F).

The supporting structure for the roof structure will now be described. the supporting structure comprises a plurality of lattice beams (12) extending in a transverse direction. The lattice beams (12) are supported above ground level on a plurality of posts (stanchions). Supported on these beams (12) there is a plurality of elongate Sections (60), disposed parallel and regularly spaced apart, aligned transversely to the beams (12). Each section (60) is of substantially identical profile and is produced from aluminium by means of extrusion as can be seen most clearly in fig 7. The profile provides a generally twin walled, rectangular, port framed figure with 2 top inwardly sloping surfaces (61) leading to 2 horizontally opposed (64), inner base (65), outerside walls (66), and outer base (67). Drilled holes are provided at staggered intervals in the lower top surface (63) to allow rain water entry into the inner chamber (68).

A complete roof structure is formed from one or more units as follows

Two lengths of roof covering are formed by assembling together a plurality of panels (10) (in the manner described above) to a length required to span a first dimension of a roof. Each length of roof covering is secured, in the course of assembly, to a first length of section (60) by the attachment edge positions (30) of the panels (10), in a manner which will be described in detail below. Further sections (60) are disposed to support the panels (10), such that their angled edge portions (66) support the sloping zones (52) of the free edge portions (32) of the panels (10), thus a complete roof can be formed, each length of the roof covering being supported along 2 sides by respective sections.

The attached edge portions (30) are secured to the chair (70) so as to be pivotable about an axis parallel to the section (60). with reference to figures 5 (the cotterpin) and 6 (the chair) a pivot block (the chair) of injection moulded plastic is provided between adjacent panels (10). The pivot block has a body (70), from opposite sides of which project a pair of flanges (72). The depth of the flanges are slightly less than that of the grooves (62) in the support beams (60). The cotterpin (78) has a diameter slightly less than the hole in the blades of the pivotal block (76) and the corresponding holes in the panels (42).

In the assembly of the panels, as described above, a respective pivot block (70) is disposed captive in the groove (62) of the support beam (60). The panel lugs (40) are offered between the blades (74) of the pivot block until the holes of the panel lug (42) correspond with the holes of the pivot block (76). The cotterpin (78) is then inserted in order to make the assembly captive, but can pivot with respect to it.

The pivot block (70) having been offered at the end of the support beam (60), and slide to the appropriate position at the joint of the panels (10), is now, by means of assembly, fixed to the panels (10).

Thus, during assembly of the lengths of roof covering, the pivot blocks (70) are first positioned in the support beam (60), and then joined to the panel lugs (40) by means of a cotterpin (78) such that the entire length is pivotally attached to the section (60). Thus allowing the plastic roof panels (10) and the pivot block (70) to expand and contract at a different rate than the aluminum support beam (60).

## Claims

1. To provide a fully opening flat roof greenhouse structure, comprising of a plurality of panels (10) of transparent material, joined together in infinite rows, arranged in parallel lines on support beams (60) in so much that when the rows of panels lift 90° via the lifting mechanism (84) each row of panels is positioned back to back with its opposite partner along a shared beam (60), thus providing a fully protected environment when closed and a natural, open air environment when open, allowing sunshine and rain to enter virtually unimpeded.
The lifting mechanism (84) allows the panels to open to any intermediate degree between 0 - 90°. Full movement from 0 - 90° can be achieved in less than one minute.

2. To provide transparent panels (10), as mentioned in Claim 1 which, are joined together by a unique vertical tongue and groove profile (20, 22), whereby the panels are locked together to form a flat trajectory, thus alleviating the need to lap the transparent material or to use glazing bars. When joined together they create the equivalent of an infinitely long, waterproof transparent panel. It is the intrinsic design of this feature, which makes a flat roof greenhouse possible.

3. The opening mechanism (84) provides strength and safety in windy conditions by locking the rows of panels back to back in the vertical position via the arms (84) which operate at regular panel intervals in opposing directions, giving the structure equal strength in the fully open and closed positions.

4. To provide an aluminium support beam (60) which has four basic functions. The first is to provide a structural support, the second is to provide a slide (72 & 62) for the hinge block (70), the third is to provide, via its twin chambers (65,66), insulation between inside and outside temperatures when the roof is closed, in order to alleviate condensation, and fourthly to provide the means to collect rainwater drip when the roof panels are open in the vertical position thus avoiding crop damage.

5. To provide a sliding hinge block (70). The base of the hinge block (72) slides in the aluminium support beam (60) in a groove (62). Thus allowing the plastic roof panels (10) and the aluminium support beam (60) to expand and contract at their individual rates.
